# EUROPÄISCHE PATENTSCHRIFT

(11) **EP 1 339 596 B1**
(45) Veröffentlichungstag und Bekanntmachung des Hinweises auf die Patenterteilung: **20.10.2004**
(21) Anmeldenummer: 01993378.7
(22) Anmeldetag: 30.10.2001
(51) Int. Cl.: B62D 5/00

(54) **ELEKTRISCHE LENKVORRICHTUNG FÜR KRAFTFAHRZEUGE**
ELECTRICAL STEERING DEVICE FOR MOTOR VEHICLES
MECANISME DE DIRECTION ELECTRIQUE DESTINE A DES VEHICULES AUTOMOBILES

(30) Priorität: 13.11.2000 DE 10056133
(43) Veröffentlichungstag der Anmeldung: 03.09.2003
(73) Patentinhaber: ZF Lenksysteme GmbH, 73527 Schwäbisch Gmünd (DE); IMS Gear GmbH, 78166 Donaueschingen (DE)
(72) Erfinder: BERNHARD, Werner, 73563 Mögglingen (DE); MAYR, Friedrich, 73760 Ostfildern (DE); JÜSCHKE, Michael, 73565 Spraitbach (DE); BERROTH, Erich, 73577 Birkenlohe (DE); KOHLER, Marc, 78609 Tuningen (DE); OBERLE, Stephan, 78048 Villingen-Schwenningen (DE)
(74) Vertreter: Schultenkämper, Johannes
(86) Internationale Anmeldenummer: PCT/EP2001/012503
(87) Internationale Veröffentlichungsnummer: WO 2002/038432

(56) Entgegenhaltungen:
- WO-A-00/23313
- WO-A-97/43564
- DE-A- 19 907 269

## Beschreibung

Die Erfindung betrifft eine elektrische Lenkvorrichtung nach der im Oberbegriff von Anspruch 1 näher definierten Art. Eine derartige Lenkvorrichtung ist zum Beispiel aus der WO 0023313A bekannt.

Elektrische Lenkvorrichtungen, wie sie aus dem Stand der Technik bekannt sind, weisen eine Eingangswelle auf, die mit einem Lenkhandrad in Wirkverbindung steht und die zur Übertragung eines für das Lenken von zu lenkenden Rädern erforderlichen Drehmomentes dient. Ein Ausgangsglied steht mit den zu lenkenden Rädern in Wirkverbindung. Ein Elektromotor, durch den direkt oder indirekt eine Hilfskraft auf das Ausgangsglied ausgeübt werden kann, ist an der Hilfskraftlenkung angeordnet. Die Eingangswelle und das Ausgangsglied sind über ein drehelastisches Glied derart miteinander verbunden, daß zwischen der Eingangswelle und dem Ausgangsglied eine begrenzte Verdrehbewegung möglich ist. Bei Lenkvorrichtungen mit Zahnstangengetriebe ist das Ausgangsglied als Antriebsritzel ausgebildet und steht über eine Zahnstange mit lenkbaren Rädern eines Kraftfahrzeuges in Wirkverbindung. Die Zahnstange steht über ein, vorzugsweise als Schneckengetriebe ausgebildetes Untersetzungsgetriebe mit einem als Elektromotor ausgeführten Servomotor in.Wirkverbindung. Das Ausgangsglied ist über das Schnekkengetriebe mit einem Elektromotor verbunden. Die Hauptkomponenten des Elektromotors sind ein Rotor und ein Stator. Der Stator ist gehäusefest, der Rotor ist über eine Antriebswelle mit einer Schneckenwelle des Schneckengetriebes verbunden.

Eine solche elektrische Lenkvorrichtung ist beispielsweise bekannt aus der DE 197 52 075 A1. Diese elektrische Lenkvorrichtung besteht aus einem elektromotorisch angetriebenen Schneckenradgetriebe, bei dem der Schaft der Schnecke elastisch im Getriebegehäuse gehalten wird. Zwischen dem Schneckenrad und der Schnecke des Schneckengetriebes ist ein Spiel vorgesehen. Die Schnecke ist in axialer Richtung verschiebbar gelagert und stützt sich über elastische Elemente am Getriebegehäuse ab. Dadurch können die negativen Einflüsse, die von dem elektromotorischen Stellantrieb auf die Lenkung übertragen werden, reduziert werden.

Die in der DE 197 52 075 A1 beschriebene elektrische Lenkvorrichtung hat den Nachteil, daß nur eine Geräuschreduzierung, nicht aber eine'Geräuschunterdrückung erzielt werden kann. Weiterhin können Geräusche, die beim Fahren gegen den Endanschlag auftreten, nicht eliminiert werden. Über die gesamte Lebensdauer kann keine gleichbleibende Funktion gewährleistet werden, da sich die elastischen Elemente durch äußere Einflüsse, wie beispielsweise Temperatur und Schmutz, in ihrer Charakteristik verändern werden.

Der vorliegenden Erfindung liegt die Aufgabe zugrunde eine elektrische Lenkvorrichtung darzustellen, die eine gleichbleibende Funktionalität über die gesamte Lebensdauer hinsichtlich der Körperschallentkopplung und Endanschlagdämpfung gewährleistet.

Die der Erfindung zugrundeliegende Aufgabe wird durch eine, auch die kennzeichnenden Merkmale des Hauptanspruchs aufweisende, gattungsgemäße elektrische Lenkvorrichtung gelöst.

Die Lösung der Aufgabe erfolgt durch eine axiale und radia1e Entkopplung und Torsionsdämpfung, insbesondere durch eine Körperschallentkopplung des Schneckengetriebes von Lenkspindel und Antriebsritzel. Dazu wird das Schneckenrad als ein Kupplungsteil einer elastischen Ausgleichskupplung ausgebildet, deren anderer Kupplungsteil als Flansch geformt ist, der mit der Eingangswelle drehfest verbunden ist. Beide Kupplungsteile sind durch einen elastischen Abstandshalter miteinander gekoppelt, wobei ein definierter Endanschlag vorgesehen ist, der bei einem bestimmten Drehmoment erreicht wird.

Dadurch läßt sich eine axiale und radiale Entkopplung des Zahnkranzes des Schneckenrades zur Lenkspindel erreichen. Die Steifigkeit von Zahnkranz zu Eingangswelle läßt sich durch Anpassen der Kontur und Form des elastischen Abstandshalters verändern.

Vorteilhafte Ausgestaltungen der Erfindung sind in den Unteransprüchen angegeben.

Nachfolgend wird die Erfindung anhand eines in den Zeichnungen dargestellten Ausführungsbeispieles näher erläutert.

Es zeigen:
- Fig. 1: den Aufbau einer elektrischen Lenkvorrichtung für Kraftfahrzeuge in schematischer Darstellung,
- Fig. 2: den Längsschnitt durch den Elektromotor aus Fig. 1 und
- Fig. 3: eine Explosionsdarstellung des Schneckenrades aus Fig. 2.

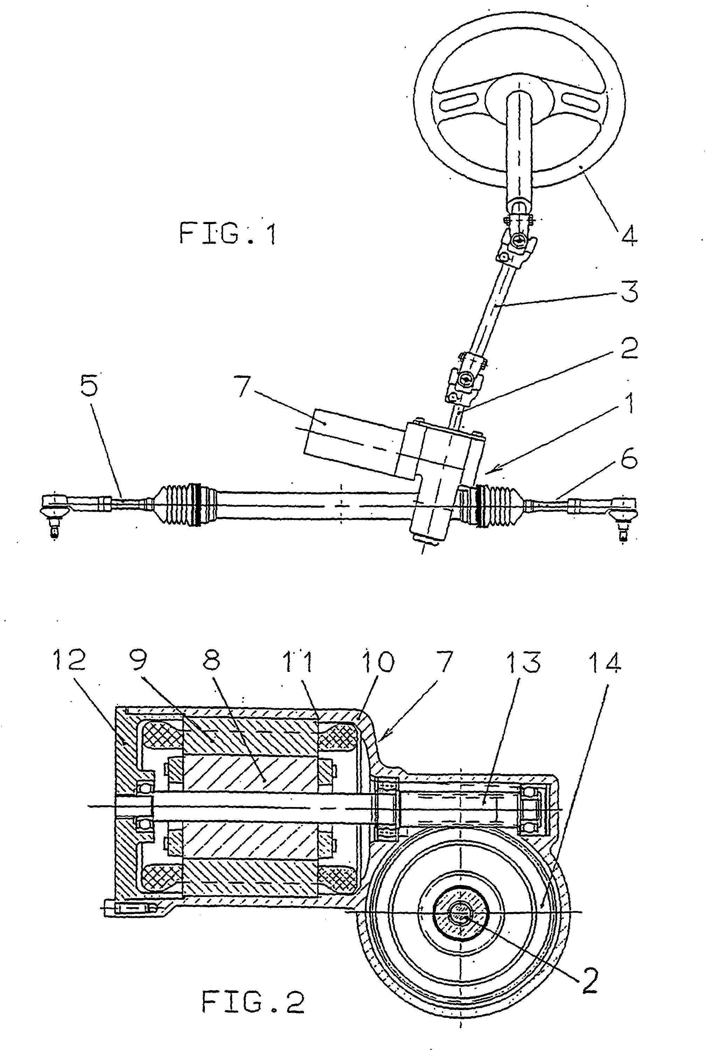

Die elektrische Lenkvorrichtung für Kraftfahrzeuge enthält in dem Ausführungsbeispiel nach Fig. 1 ein Lenkgetriebe einer Zahnstangenlenkung 1. Eine solche Zahnstangenlenkung 1 ist allgemein bekannt und wird deshalb hier nicht näher erläutert. Eine Eingangswelle 2, die - beispielsweise über eine. mit Kreuzgelenken versehene Lenksäule 3 - mit einem Lenkhandrad 4 in Wirkverbindung steht, trägt ein nicht dargestelltes Antriebsritzel der Zahnstangenlenkung

Eine nicht dargestellte Zahnstange der Zahnstangenlenkung 1 bildet zusammen mit zwei Lenkschubstangen 5 und 6 ein Ausgangsglied, das mit nicht dargestellten, zu lenkenden Rädern in Wirkverbindung steht. Die Zahnstange bildet außerdem das Antriebsteil der Lenkung.

Mit einer solchen Lenkvorrichtung kann ein Lenkdrehmoment von dem Lenkhandrad 4 zu den zu lenkenden Rädern übertragen werden.

Durch einen Elektromotor 7 kann ein unterstützendes Moment auf die Eingangswelle 2 ausgeübt werden. In dem Ausführungsbeispiel nach Fig. 1 ist der Elektromotor 7 derart angeordnet, daß seine Achse senkrecht zu der Achse der Eingangswelle 2 und damit des Antriebsritzels steht. Seine Achse kann aber auch unter einem anderen Winkel zur Achse der Eingangswelle 2 stehen.
Mit gleicher oder ähnlicher Wirkung kann der Elektromotor 7 derart angeordnet sein, daß seine Achse parallel zu der Achse der Eingangswelle 2 und damit auch des Antriebsritzels oder eines anderen Teils der Lenksäule 3 angeordnet ist.
In den beiden bisher beschriebenen Anordnungsarten des Elektromotors 7 wirkt dieser auf die Eingangswelle 2 mit dem Antriebsritzel der Zahnstangenlenkung 1. Ebenso kann der Elektromotor 7 so angeordnet werden, daß seine Achse parallel oder koaxial zur Längsrichtung der Zahnstange der Zahnstangenlenkung 1 liegt.

Vorteilhafterweise ist der Elektromotor 7 als Asynchronmotor ausgebildet. Der Asynchronmotor besteht im wesentlichen aus einem drehbaren Rotor 8 und einer feststehenden Wicklung 9. Die Drehmomenterzeugung erfolgt durch ein von außen über Steuer- und Schaltelemente vorgegebenes Drehfeld. Der Rotor 8 ist zweckmäßigerweise als Käfigläufer oder als Kurzschlußläufer ausgeführt. Da ein solcher Elektromotor keine Permanentmagnete benötigt, wird bei einer Störung im elektrischen bzw. elektronischen Teil der Lenkvorrichtung beim Drehen des Rotors 8 kein Magnetfeld erzeugt, welches die Drehbewegung des Rotors 8 beeinflussen bzw. hemmen würde. Dadurch wird gewährleistet, daß der Kraftfluß vom Lenkhandrad 4 zu den gelenkten Rädern bei einem Störfall nicht beeinträchtigt wird.

In dem in Fig. 2 dargestellten Ausführungsbeispiel ist die Wicklung 9 des Elektromotors 7 platzsparend.direkt in einem Gehäuse 10 integriert und durch einen Anschlag 11 und einen axial vorgespannten Deckel 12 gegen axiale und radiale Bewegung gesichert.

Das von dem Elektromotor 7 erzeugte Drehmoment wird über ein Schneckengetriebe, bestehend aus Schnecke 13 und Schneckenrad 14, auf die Eingangswelle 2 übertragen.

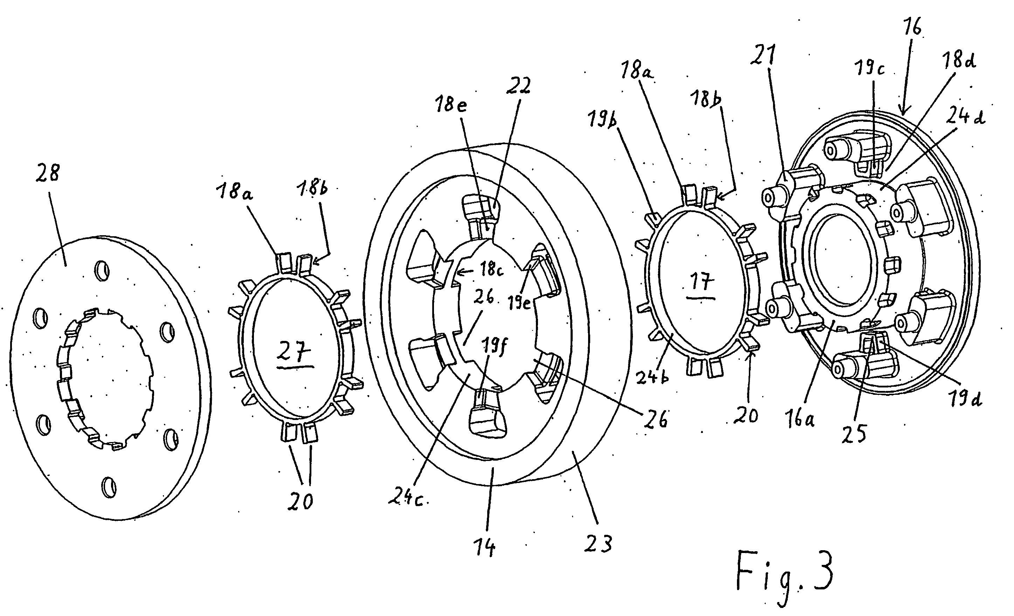

In Fig. 3 ist eine Explosionsdarstellung der elastischen Ausgleichskupplung gezeigt, von der das Schneckenrad 14 in Figur 2 ein Teil ist.

Dieses weist einen Zahnkranz 23 auf, wobei die Zähne nicht dargestellt sind, in welche die Schnecke 13 (Fig. 2) eingreift. Das andere Kupplungsteil der elastischen Ausgleichskupplung, nämlich der Flansch 16 ist drehfest mit der (in Fig. 3 nicht dargestellten) Eingangswellen 2 (siehe Fig. 1 und 2) verbunden, und zwar über einen Stutzen, dessen Stirnfläche mit 16a und dessen Mantelfläche mit 24d bezeichnet ist.

Ergänzt werden die beiden Teile 14 und 16 der Ausgleichskupplung durch einen ringförmigen, elastischen Abstandshalter 17 mit Fortsätzen 20. Im zusammengebauten Zustand liegt die Innenfläche 24b des Abstandshalters 17 auf der Mantelfläche 24d des Stutzens des Flansches 16. Dabei umgreifen jeweils zwei Fortsätze 20 einen der Zapfen 25 am Flansch 16.

Das Schneckenrad 14 ist spiegelsymetrisch gestaltet, hat also auf der nicht sichtbaren Rückseite dasselbe Aussehen wie auf der Vorderseite. Nach dem Zusammenbau ist das Schneckenrad 14 auf dem Abstandshalter 17 gelagert, der wiederum auf dem Stutzen des Flansches 16 gelagert ist. Die Innenfläche 24c des Schneckenrades 14 liegt also auf der Ring-Außenfläche 24a des Abstandshalters 17 auf. Für die Fortsätze 20 des Abstandshalters 17 sind Ausbuchtungen 26 von Ausnehmungen 22 in dem Schneckenrad 14 vorgesehen. In diesen Ausbuchtungen 26 finden die Fortsätze 20 Platz.

Obwohl unter Umständen die Teile 14, 16 und 17 genügen würden, um die Funktion einer elastischen Ausgleichskupplung zu erfüllen, ist die Vorderseite des Schneckenrades 14 noch durch einen zweiten Abstandshalter 27 und einen zweiten Flansch 28 zu einer weiteren Ausgleichskupplung ergänzt. Im zusammengebauten Zustand sind die Flansche 16 und 28 durch Nasen 21 miteinander verbunden. Außerdem greift eine Innenverzahnung des zweiten Flansches 28 in eine Verzahnung des Stutzens am Flansch 16. Der zweite elastische Abstandshalter 27 sitzt im zusammengebauten Zustand ebenfalls auf dem Stutzen des Flansches 16. Der zweite Flansch 28 weist auf seiner Rückseite dieselben Zapfen 25 auf wie der Flansch 16. Diese Zapfen des zweiten Flansches 28 ragen jeweils in den Zwischenraum zwischen zwei eng benachbarten Fortsätzen 20 des Abstandshalters 27.

Es liegt dann beispielsweise die frontseitige Anlagefläche 18a an der Rückseite des zweiten Flansches 28 an. Die Rückseitige Anlagefläche 18b des zweiten Abstandshalters 27 liegt an der Anlagefläche 18e einer Ausbuchtung 26 im Schneckenrad 14 an. Seitliche Anlageflächen 19a, 19b der Abstandshalter 17 bzw. 27 liegen an seitlichen Anlageflächen 19c, 19d der Zapfen 25 bzw. an seitlichen Anlageflächen 19e, 19f von Ausbuchtungen 26 im Schneckenrad 14 an.

Die Fortsätze 20 verhindern also, dass die Zapfen 25 die Seitenflächen der Ausbuchtungen 26 bei der Übertragung eines Drehmomentes in der einen oder anderen Richtung unmittelbar berühren können. Die Abstandshalter 17, 27 sind auch so breit gestaltet, dass sie eine unmittelbare Berührung der Teile 14 und 16 bzw. 14 und 28 in Achsialrichtung verhindern. Und da die ringförmigen Teile der Abstandshalter 17, 27 zwischen der Mantelfläche 24d des Flansches 16 und der Innenfläche 24c des Schneckenrades 14 liegen, ist auch in radialer Richtung dafür gesorgt, dass eine unmittelbare Berührung zwischen dem Stutzen des Flansches 16 und dem Schneckenrad 14 vermieden ist. Die Abstandshalter 17, 27 bilden also sowohl in axialer als auch in radialer und schließlich auch in tangentialer Richtung einen Puffer zwischen dem Flansch 16 (und damit der Eingangswelle 2) und dem Schneckenrad 14.

Die elastische Abpufferung ist aber in tangentialer Richtung nicht unbegrenzt, denn die Ausnehmungen 22 im Schnekkenrad 14, durch welche die Nasen 21 des Flansches 16 greifen, sind nur wenig größer (in tangentialer Richtung gemessen) als die Nasen 21. Das hat zur Folge, dass die Nasen 21 und die Ausnehmungen 22 gegenseitige Anschläge bilden, die zur Wirkung kommen, wenn bei der Übertragung eines übermäßig großen Drehmomentes die Fortsätze 20 der Abstandshalter 17, 27 um einen bestimmten Betrag zusammengequetscht sind.

### Bezugszeichen

- 1: Zahnstangenlenkung
- 2: Eingangswelle
- 3: Lenksäule
- 4: Lenkhandrad
- 5: Lenkschubstange
- 6: Lenkschubstange
- 7: Elektromotor
- 8: Rotor
- 9: Wicklung
- 10: Gehäuse
- 11: Anschlag
- 12: Deckel
- 13: Schnecke
- 14: Schneckenrad
- 15 16: Flansch
- 17: Abstandshalter
- 18a, b, c, d: Anlageflächen
- 19a, b, c, d: Anlageflächen
- 20: Fortsatz
- 21: Nase
- 22: Ausnehmung
- 23: Zahnkranz
- 24a, b, c, d: Anlageflächen
- 25: Zapfen
- 26: Ausbuchtung
- 27: zweiter Abstandshalter
- 28: zweiter Flansch

## Patentansprüche

1. Elektrische Lenkvorrichtung für ein Kraftfahrzeug, mit einem Elektromotor (7) mit Schneckengetriebe, das aus einer Schnecke (13) und einem mit einer Eingangswelle (2) gekoppelten Schneckenrad (14) mit Zahnkranz (23) besteht, mit folgenden Merkmalen
• das Schneckenrad (14) bildet eines der beiden miteinander zu kuppelnden Kupplungsteile (14, 16) einer elastischen Ausgleichskupplung, deren anderes Kupplungsteil (16) drehfest mit der Eingangswelle (2) verbunden ist,
• beide Kupplungsteile (14, 16) sind nur durch einen oder mehrere elastische Abstandshalter (17) miteinander gekoppelt
• der Eingangswelle (2) ist drehfest ein Flansch (16) zugeordnet,
• Flansch (16) und Schneckenrad (14) bilden die beiden miteinander zu kuppelnden-Kupplungsteile der elastischen Ausgleichskupplung zur Übertragung von Dehmomenten,
• beide Kupplungsteile (16, 14) sind durch den elastischen Abstandshalter (17) in axialer, radialer und tangentialer Richtung voneinander getrennt,
**gekennzeichnet durch** Folgende Merkmale:
• der Abstandshalter (17) weist Anlageflächen (18a, 19a, 19b, 24a, 24b) auf, auf welche im Betrieb axiale, radiale und tangentiale Druckkräfte wirken, welche von korrespondierenden Anlageflächen (18c, 18d, 19c, 19d, 24b, 24d) eines der beiden Kupplungsteile (16, 14) ausgeübt werden,
• eines der beiden Kupplungsteile (16) weist wenigstens eine Nase (21) auf, die mit Spiel in eine größere Ausnehmung (22) des anderen Kupplungsteils (14) greift,
• ab einem bestimmten Drehmoment und entsprechender elastischer Verformung des Abstandshalters (17) ergänzen sich die Nase (21) und die Ausnehmung (22) nach Überwindung des Spiels zu gegenseitigen Anschlägen.

2. Elektrische Lenkvorrichtung nach Anspruch 1 **dadurch gekennzeichnet, daß** das Schneckenrad (14) unter Zwischenschaltung des elastischen Abstandshalters (17) auf einem Stutzen (16a) gelagert ist, welcher Teil des anderen Kupplungsteils (16) ist.

## Claims

1. Electric steering apparatus for a motor vehicle, having an electric motor (7) with a worm gear mechanism which comprises a worm (13) and a worm gear (14) which is coupled to an input shaft (2) and has a crown gear (23), having the following features:
• the worm gear (14) forms one of the two clutch parts (14, 16) to be coupled to one another of an elastic balancing clutch, whose other clutch part (16) is connected fixedly to the input shaft (2) so as to rotate with it,
• both clutch parts (14, 16) are coupled to one another only by one or a plurality of elastic spacer elements (17),
• a flange (16) is assigned fixedly to the input shaft (2) so as to rotate with it,
• the flange (16) and the worm gear (14) form the two clutch parts to be coupled to one another of the elastic balancing clutch for transmitting torques,
• the two clutch parts (16, 14) are separated from one another in the axial, radial and tangential direction by the elastic spacer element (17),
**characterized by** the following features:
• the spacer element (17) has contact surfaces (18a, 19a, 19b, 24a, 24b), on which axial, radial and tangential compressive forces act during operation, which compressive forces are exerted by corresponding contact surfaces (18c, 18d, 19c, 19d, 24b, 24d) of one of the two clutch parts (16, 14),
• one of the two clutch parts (16) has at least one lug (21) which engages with play into a larger recess (22) of the other clutch part (14),
• above a certain torque and corresponding elastic deformation of the space element (17), the lug (21) and the recess (22) complement one another, after overcoming the play, to form mutual stops.

2. Electric steering apparatus according to Claim 1, **characterized in that**, with the elastic spacer element (17) arranged in between, the worm gear (14) is mounted on a connecting piece (16a) which is part of the other clutch part (16).

## Revendications

1. Mécanisme de direction électrique pour un véhicule automobile, comprenant un moteur électrique (7) avec un engrenage à vis sans fin, qui se compose d'une vis sans fin (13) et d'une roue hélicoïdale (14) avec une couronne dentée (23) accouplée à un arbre d'entrée (2), ayant les caractéristiques suivantes :
• la roue hélicoïdale (14) forme l'une des deux parties d'accouplement (14, 16) à accoupler l'une à l'autre d'un accouplement d'équilibrage élastique, dont l'autre partie d'accouplement (16) est connectée solidaire en rotation à l'arbre d'entrée (2),
• les deux parties d'accouplement (14, 16) sont seulement accouplées l'une à l'autre par un ou plusieurs dispositifs d'écartement élastiques (17),
• une bride (16) est associée de manière solidaire en rotation à l'arbre d'entrée (2),
• la bride (16) et la roue hélicoïdale (14) forment les deux parties d'accouplement à accoupler l'une à l'autre de l'accouplement d'équilibrage élastique en vue du transfert des couples,
• les deux parties d'accouplement (16, 14) sont séparées l'une de l'autre par le dispositif d'écartement élastique (17) dans la direction axiale, radiale et tangentielle,
**caractérisé par les caractéristiques suivantes :**
• le dispositif d'écartement élastique (17) présente des faces d'appui (18a, 19a, 19b, 24a, 24b) sur lesquelles, en fonctionnement, s'exercent des forces axiales, radiales et tangentielles, qui sont exercées par des faces d'appui correspondantes (18c, 18d, 19c, 19d, 24b, 24d) de l'une des deux pièces d'accouplement (16, 14),
• l'une des deux pièces d'accouplement (16) présente au moins un nez (21) qui vient en prise avec jeu dans un évidement relativement grand (22) de l'autre pièce d'accouplement (14),
• à partir d'un couple déterminé et d'une déformation élastique correspondante du dispositif d'écartement (17), le nez (21) et l'évidement (22) se complètent après avoir surmonté le jeu pour former des butées opposées.

2. Mécanisme de direction électrique selon la revendication 1, **caractérisé en ce que** la roue hélicoïdale (14) est montée sur un ajutage (16a) en intercalant le dispositif d'écartement élastique (17), l'ajutage faisant partie de l'autre pièce d'accouplement (16).
